Europäisches Patentamt

(19) European Patent Office

Office européen des brevets

(11) Publication number: **0 456 522 A2**

(12) **EUROPEAN PATENT APPLICATION**

(21) Application number: **91304282.6**

(22) Date of filing: **13.05.91**

(30) Priority: **11.05.90 GB 9010644**

(43) Date of publication of application:
**13.11.91 Bulletin 91/46**

(84) Designated Contracting States:
**AT BE DE DK ES FR GB IT NL SE**

(71) Applicant: **SOUTHGATE TUBULAR PRODUCTS LIMITED**
**Buntings Lane**
**Methwold, Norfolk IP26 4PR (GB)**

(51) Int. Cl.⁵: **G11B 33/04, G11B 23/023**

(72) Inventor: **The designation of the inventor has not yet been filed**

(74) Representative: **Sorrell, Terence Gordon et al**
**Fitzpatricks 4 West Regent Street**
**Glasgow G2 1RS Scotland (GB)**

(54) **Improved display devices.**

㉗ A display device comprising a longitudinally extending support member (13) and a plurality of transversely extending members (17), each having pairs of longitudinally extending projections (18), one on each side surface thereof. Each of the pair of projections (18) are positioned to lie above the surface of the longitudinally extending member (13). The transversely extending members (17) are locatable to span the support member (13) at selective longitudinal positions therealong so as to accommodate a generally rectangular product between any two adjacent transversely extending members (17). Preferably, the projections (18) are so spaced apart, and formed with support faces (19) such that, either a pair of compact discs (11) or an audio cassette (12) can be located between any two adjacent projections (18) for manual movement between forewardly and rearwardly extending positions.

EP 0 456 522 A2

Fig. 5

Fig. 5A

The invention relates to display devices, more particularly to such devices for displaying compact discs (CD's), audio cassettes and the like in retail outlets.

There have been many prior proposals for such display, for example as disclosed in United States patent specification No 4,819,813, United Kingdom patent specification No 2005226A and International patent specification No WO 88/09141. All such prior proposals disclose devices suitable for displaying CD's or audio cassettes.

It is an object of the present invention to provide a display device capable of displaying both CD's and audio cassettes in juxtaposed adjacent positions in the same device.

According to one aspect of the invention there is provided a display device comprising a plurality of location means, each such location means being so arranged as to be capable of supporting, for display, both a pair of compact discs and an audio cassette in juxtaposed relationship.

According to a further aspect of the invention there is provided a display device comprising a longitudinally extending support member and a plurality of transversely extending members, each having pairs of longitudinally extending projections one on each side surface thereof, each of which pair of projection are positioned to lie above the surface of the longitudinally extending member, such transversely extending members being locatable to span the support member at selective longitudinal positions therealong so as to accommodate a generally rectangular product between any two adjacent tranversely extending members.

Preferably said projection are so spaced apart, and formed with support faces such that, either a pair of compact discs or an audio cassette can be located between any two adjacent projections for manual movement between forewardly and rearwardly extending positions.

According to yet a further aspect of the invention there is provided a display device comprising a longitudinally extending support member formed with a plurality of longitudinally extending upstanding ribs therein and a plurality of transversely extending members, each having pairs of longitudinally extending projections one on each side surface thereof, each of which pair of projections are positioned to lie generally above an upstanding rib, such transversely extending members being locatable to span the support member at longitudinal positions therealong so as to accomodate either a compact disc or an audio cassette between any two adjacent transversely extending members. Preferably said projections and ribs are so spaced apart, and formed with support faces such that, either a pair of compact discs or an audio cassette can be located between any two adjacent projection and their corresponding ribs for manual movement between forewardly and rearwardly extending positions.

The support member may be formed with upstanding front and rear walls including location means, for example slots or pairs of ribs, for locating the transverse extending members.

Throughout this specification the terms compact disc (CD) and audio cassette are intended to refer to such devices located within individual standard storage box packaging. The invention stems from the realisation that the standard packaging of a single audio cassette has approximately twice the depth and half the width of the standard packaging of a single compact disc.

The foregoing and further features of the invention may be more readily understood from the following description of some preferred embodiments thereof, by way of example, with reference to the accompanying drawings, in which:-

Fig 1 is a front sectional view of a portion of a display device showing a CD and an audio tape cassette displayed therein;

Fig 2 is an end sectional view of the device of Fig 1;

Fig 3 is a front sectional view of a portion of the device of Fig 2;

Fig 4 is a plan view of a portion of the device of Fig 2;

Fig 5 is a perspective view of a portion of a device similar to that of Figs 1 to 4 located in position for use;

Fig 5A is a schematic side elevational view of the device of Fig 5;

Fig 6 is a perspective view of an alternative device similar to that of Fig 5;

Fig 6A is a schematic side elevational view of the device of Fig 6, and

Fig 7 is an end sectional view of a further alternative embodiment.

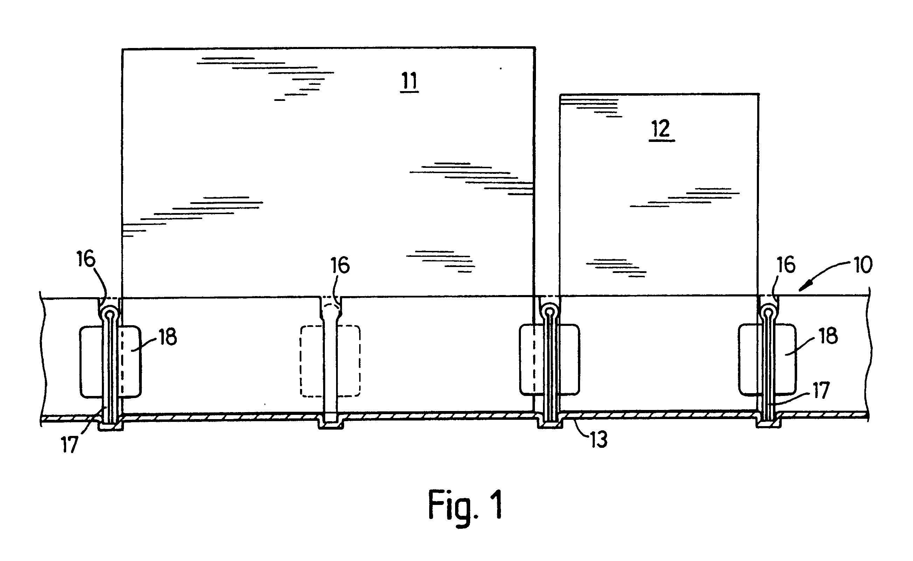

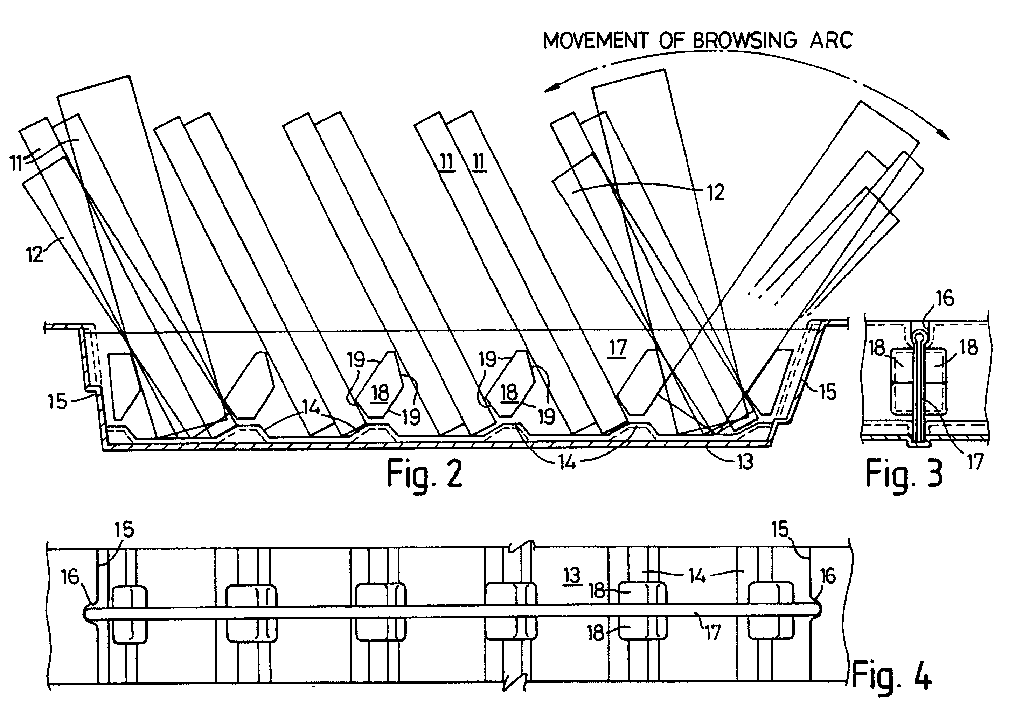

Referring now firstly to Fig 1 to 4 of the drawings there is shown a display device 10 capable of lacating, for display, both CD's 11 and audio tape cassettes 12 juxtaposed adjacent one another. The device 10 comprises a longitudinally extending member 13 with upstanding ribs 14 extending therealong. The member 13 is also formed with front and rear walls 15 which are slotted at points 16 therealong, the points 16 being spaced apart by a distance slightly greater than the width of an audio tape cassette. Transverse partition walls 17 are slidingly locatable to span between corresponding slot 16 in the front and rear walls 15, the ribs 14 and member 13 also being correspondingly slotted to accommodate a wall 17. Each side face of each wall 17 is formed with pairs of protrusions 18 located to lie above each rib 14 when located to span member 13. Each protrusion 18 is formed with a plurality of flat faces angled so as to accommodate and locate either an audio tape cassette 12 or two CD's 11, between two adjacent protrusions 18 on one side face of wall 17 and between two adjacent ribs 14, for manual movement between rearwardly and forwardly directed positions as shown in Fig 2. Each wall 17 may be formed from a flat member having pairs of protrusions 18 on one face thereof, such member then being folded along a centre line to produce a wall 17 having protrusions 18 on both faces thereof.

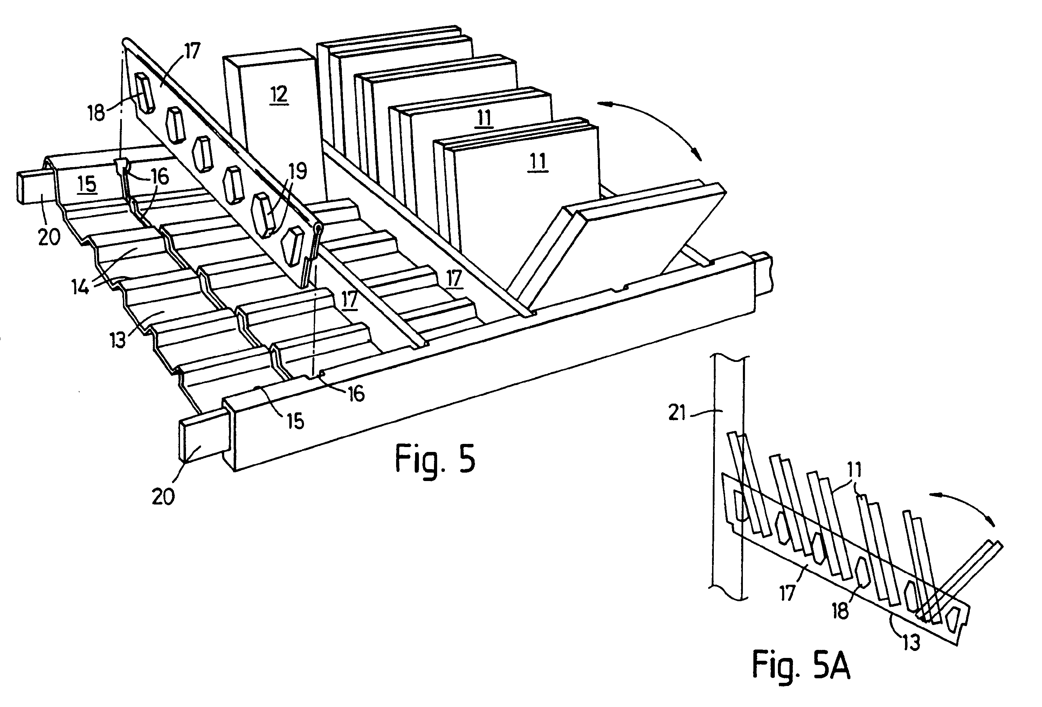

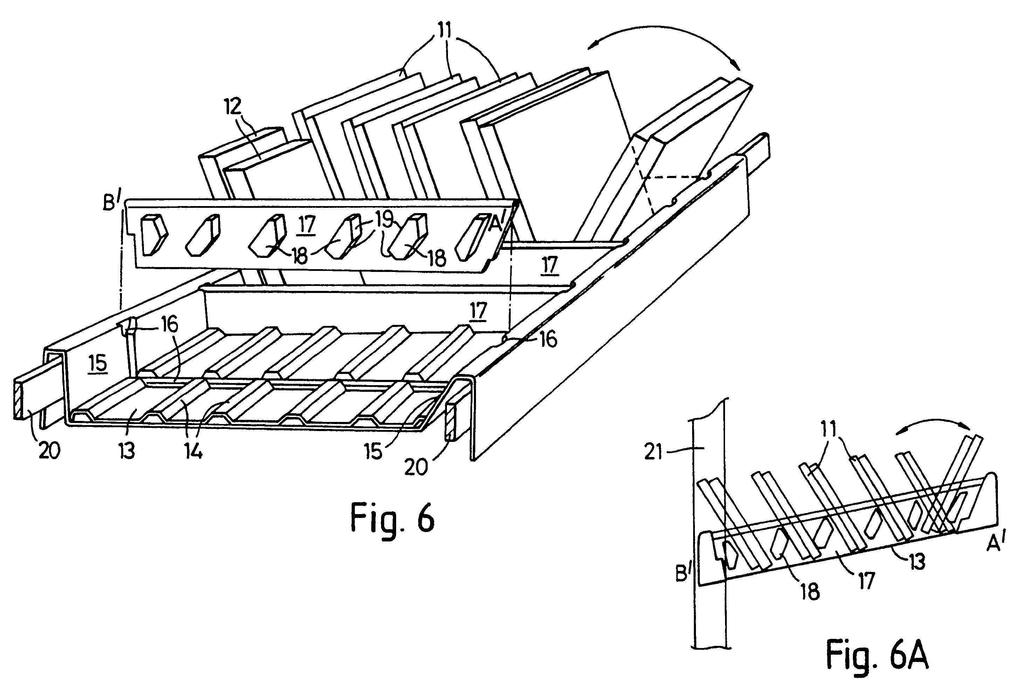

Referring now to Fig 5 an 5A there is shown a display device in which member 13 is supporte on longitudinally extending support rails 20 so as to lie angled upwardly from front to rear from a support wall 21. Figs 6 and 6A show similar views to that of Figs 5 and 5A but in this embodiment the member 13 lies angled downwardly from front to rear.

The main difference between the Fig 5 and 6 embodiments is the different angles of faces 19 of protrusions 18 to present a similar angle of view "browsing angle" when in use. The Fig 6 embodiment is also intended for use when member 13 is located generally horizontally.

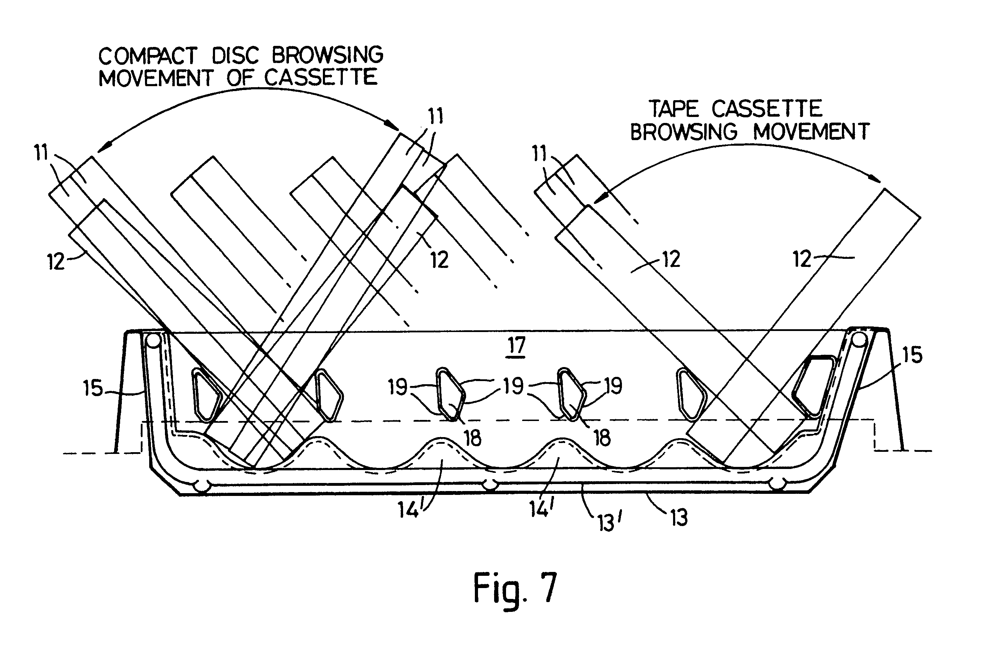

Fig 7 shows a further alternative embodiment in which the upstanding ribs $14^1$ are the upper portions of arcuate corrugations in the floor of a vacuum formed tray $13^1$. This embodiment has the advantages of relatively inexpensive manufacturing cost and ease of "browsing" movement of the contents.

The device may be formed of sheet metal, such as aluminium, or alternatively may be moulded of synthetic plastics material. In further envisaged embodiments (not shown) the support member need not be formed with ribs 14 but protrusions 18 formed to extend further from the side faces of walls 17; each protrusion 18 may be formed of one or more projecting pins; the walls 17 may be dispensed with and the ribs 14 replaced by shaped support ribs.

Hence there are shown arrangements for selectively displaying tape cassettes and CD's closely adjacent even though recorded in different format. Furthermore, although this is envisaged as the primary function, the arrangement of partition walls with suitably angled and spaced protrusions could be utilised to locate and display other rectangular products such as video tape cassettes or books in a readily "browseable" format.

## Claims

1. A display device characterised by comprising a plurality of location means (17,18), each such location means (17,18) being so arranged as to be capable of supporting, for display, both a pair of compact disc (11) and an audio cassette (12) in justaposed relationship.

2. A display device characterised by comprising a longitudinally extending support member (13) and a plurality of transversely extending members (17), each having pairs of longitudinally extending projections (18) one on each side surface thereof, each of which pair of projections (18) are positioned to lie above the surface of the longitudinally extending member (13), such transversely extending members (17)being locatable to span the support member (13) at selective longitudinal positions therealong so as to accommodate a generally rectangular product between any two adjacent transversely extending members (17).

3. A device as claimed in claim 2 characterised in that said projections (18) are so spaced apart, and formed with support faces (19) such that, either a pair of compact disc (11) or an audio cassette (12) can be located between any two adjacent projections (18) for manual movement between forewardly and rearwardly extending positions.

4. A display device characterised by comprising a longitudinally extending support member (13) formed with a plurality of longitudinally extending upstanding ribs (14) therein and a plurality of transversely extending members (17), each having pairs of longitudinally extending projections (18) one on each side surface thereof, each of which pair of projections (18) are positioned to lie generally above an upstanding rib (14), such transversely extending member (17) being locatable to span the support member (13) at selective longitudinal positions therealong so as to accommodate either a compact disc (11) of an audio cassette (12) between any two adjacent transversely extending members (17).

5. A display device as claimed in claim 4 characterised in that said projection (18) and ribs (14) are so spaced apart, and formed with support faces (19) such that, either a pair of compact disc (11) or an audio cassette (12) can be located between any two adjacent projections (18) and their corresponding ribs (14) for manual movement between forewardly and rearwardly extending positions.

6. A display device as claimed in any one of claims 2 to 5 inclusive characterised in that the support member (13) is formed with upstanding front and rear wall (15) including location means, for example, clots (16) or pairs of ribs, for locating the transversely extending member (17).

7. A display device as claimed in any one of claims 4 to 6 inclusive characterised in that said longitudinally upstanding ribs (14) comprise part of a plurality of corrugations formed in the floor of a tray (13).

8. A display device as claimed in claim 7 characterised in that said corrugations ($14^1$) have an arcuate configuration.

Fig. 1

EP 0 456 522 A2

MOVEMENT OF BROWSING ARC

11

12

11 11

12

19

19 18 19

19 17

18

18 19

15

14

18

14

13

15

Fig. 2

16

18 18

17

Fig. 3

EP 0 456 522 A2

15

16

13

18

14

15

16

18

17

Fig. 4

Fig. 5

Fig. 5A

EP 0 456 522 A2

EP 0 456 522 A2

Fig. 6

Fig. 6A

COMPACT DISC BROWSING
MOVEMENT OF CASSETTE

TAPE CASSETTE
BROWSING MOVEMENT

Fig. 7

EP 0 456 522 A2